# EUROPÄISCHE PATENTSCHRIFT

(11) **EP 1 531 117 B1**
(45) Veröffentlichungstag und Bekanntmachung des Hinweises auf die Patenterteilung: **10.05.2006**
(21) Anmeldenummer: 04024026.9
(22) Anmeldetag: 08.10.2004
(51) Int. Cl.: B62D 53/00, B62D 47/02, B60D 1/173

(54) **Zugfahrzeug mit einem insbesondere doppelachsigen Anhänger**
Tractor vehicle and trailer having in particular two axles
Véhicule tracteur et remorque avec notamment deux essieux

(30) Priorität: 15.11.2003 DE 10353411; 13.03.2004 DE 202004003935 U
(43) Veröffentlichungstag der Anmeldung: 18.05.2005
(73) Patentinhaber: HÜBNER GmbH, 34123 Kassel (DE)
(72) Erfinder: Koch, Robert, 37242 Bad Sooden Allendorf (DE); Karasek, Jens, 34260 Kaufungen (DE)
(74) Vertreter: WALTHER, WALTHER & HINZ Patentanwälte - European Patent Attorneys

(56) Entgegenhaltungen:
- EP-A- 1 342 594
- EP-A- 1 410 979
- DE-A1- 3 134 301
- DE-U1- 20 019 978
- US-A- 4 948 157

## Beschreibung

Die vorliegende Erfindung betrifft ein Zugfahrzeug mit einem doppelachsigen Anhänger, wobei zwischen Anhänger und Zugfahrzeug eine Gelenkverbindung vorgesehen ist, wobei die Gelenkverbindung leicht lösbar an das Zugfahrzeug an- bzw. abkuppelbar ist und wobei zwischen Zugfahrzeug und Anhänger ein Übergang vorgesehen ist, der durch einen Balg umschlossen ist, wobei die Gelenkverbindung zwei kreuzweise zueinander verlaufende Gelenkarme umfasst, die jeweils endseitig an dem entsprechenden Fahrzeug schwenkbar angelenkt sind. Ein solches Fahrzeug ist beispielsweise aus der EP 1 342 594 A bekannt. Unter dem Begriff "Fahrzeug" werden sowohl Busse mit Anhänger als auch Lastkraftwagen mit Anhänger verstanden.

In diesem Zusammenhang sind zum Einen sogenannte Gelenkbusse bekannt. Ein solcher Gelenkbus besteht im Prinzip aus zwei Fahrzeugteilen, die gelenkig miteinander verbunden sind. Um einen Übergang zwischen den beiden Fahrzeugteilen für Personen zu ermöglichen, ist ein Übergang bestehend aus Brücke und Balg zwischen den Fahrzeugteilen vorgesehen. Das nachlaufende Fahrzeugteil besitzt hierbei eine Achse, die bei einem sogenannten Pusher durch den hinten sitzenden Motor angetrieben ist. Daneben gibt es sogenannte Puller, das heißt, dies sind Busse, bei denen im Bereich der Hinterachse des vorderen Fahrzeugteils der Motor sitzt, und wobei dieser Motor die Hinterachse des vorderen Fahrzeugteils antreibt. Der Vorteil des Pushers gegenüber dem Puller besteht darin, dass der Bus im Prinzip über seine gesamte Länge als Niederflurbus ausgebildet sein kann. Bei einem Puller ist dies nicht möglich, da im Bereich des Gelenkes der hierfür erforderliche Raum wegen des Motors nicht zur Verfügung steht. Trotz der unbestreitbaren Vorteile der Gelenkbusse, insbesondere wenn diese als Pusher ausgebildet sind, im Hinblick auf die Niederflurigkeit , so ist doch als Nachteil zu vermerken, dass solche Busse zu bestimmten Tageszeiten kaum besetzt im Einsatz sind. Das heißt, dass die Fahrt derartiger Busse dann in hohem Maße unwirtschaftlich ist.

Insofern ist bereits aus vergangener Zeit bekannt, Busse mit Anhänger fahren zu lassen, wobei der Anhänger lediglich durch eine Deichsel mit dem Bus als ziehendem Fahrzeug verbunden ist. Allerdings werden seit ungefähr 40 Jahren derartige Gespanne nicht mehr hergestellt. Der Grund hierfür liegt unter anderem darin, dass der Busfahrer keinen Überblick über das hat, was im Anhänger passiert.

Aus wirtschaftlichen Gründen besteht allerdings ein erhebliches Interesse daran, den Busverkehr hinsichtlich der Transportkapazität an den Tagesrhythmus in Bezug auf die Passagierzahlen anpassen zu können.

Bekannt sind darüber hinaus LKW, und zwar solche mit Anhänger. Die Anhänger sind an dem Zugfahrzeug üblicherweise durch eine Deichsel und eine Klauenkupplung angekuppelt. Der Anhänger selbst bildet eine selbstständige Einheit zu dem Zugfahrzeug.

Soll das Zugfahrzeug beladen werden, so ist dies nur ohne Anhänger möglich, das heißt, dass der Anhänger abgekuppelt werden muss. Dies ist aufwendig, wobei hiermit auch eine Verlängerung der Ladezeiten einhergeht. Andererseits haben Hängerfahrzeuge durchaus Vorteile, so zum Beispiel den, dass durch Abkuppeln des Hängers eine Anpassung der Kapazität erfolgen kann. Insofern besteht auch in Bezug auf den LKW-Betrieb ein erhebliches Interesse daran, die Transportkapazität an die vorhandene benötigte Kapazität anpassen zu können.

Zur Verbindung zweier Fahrzeugteile ist aus der DE 31 34 301 A1 ein Gelenk bestehend aus zwei kreuzweise angeordneten Gelenkstangen bekannt.

Aus der EP 1 342 594 A2 ist ebenfalls ein Gelenk zwischen zwei Teilen eines Gelenkfahrzeuges bekannt, das sich durch zwei kreuzweise angeordnete Gelenkarme zwischen den Fahrzeugen auszeichnet. Über dem Gelenk befindet sich eine Übergangsbrücke, wobei Brücke und Gelenk durch einen Balg umgeben sind.

Wesentlich ist nun, dass die Möglichkeit besteht, schnell auf die Anforderung unterschiedlicher Transportkapazitäten reagieren zu können. Ein wesentlicher Aspekt hierbei ist, wie einfach und schnell der An- bzw. Abkuppelvorgang zwischen den Fahrzeugteilen erfolgen kann.

Insofern wird erfindungsgemäß vorgeschlagen, ein Fahrzeug mit einem insbesondere doppelachsigen Anhänger gemäß der eingangs beschriebenen Art bereitzustellen, wobei die Gelenkarme endseitig durch eine Traverse verbunden sind, wobei die Traverse an das Fahrzeug an- bzw. abkuppelbar ist, wobei zur Kupplung der Traverse des Anhängers mit dem Zugfahrzeug mindestens eine, vorzugsweise zwei beabstandet zueinander angeordnete Kupplungen mit jeweils zwei Kuppelgliedern vorgesehen sind, wobei die beiden Kuppelglieder hydraulisch, pneumatisch, mechanisch oder elektrisch lösbar in Eingriff miteinander bringbar sind.

Weitere vorteilhafte Merkmale sind den Unteransprüchen zu entnehmen.

Wesentlich hierbei ist, dass die Kupplung der beiden Fahrzeuge oder Fahrzeugteile erfolgen soll, ohne dass manuell in den Kuppelvorgang eingegriffen werden muss. Der Fahrer des Zugfahrzeuges, z. B. des Busses, soll vielmehr vom Fahrerstand aus in der Lage sein, den Kupplungsvorgang einzuleiten und auch auszuführen, ohne auf die Hilfe Dritter angewiesen zu sein bzw. ohne dass der Fahrer zum An- bzw. Abkuppeln das Fahrzeug verlassen muss. Die Kupplung selbst umfasst - wie bereits ausgeführt - vorzugsweise zwei Kuppelglieder, wobei das eine Kuppelglied an der Traverse angeordnet ist und endseitig ein Auge aufweist. Das andere am Zugfahrzeug angeordnete Kuppelglied umfasst einen in das Auge des einen Kuppelgliedes ein- und ausrückbaren Bolzen, der von einem am Bus angeordneten Aufnahmeelement axial beweglich gehalten ist.

Nach einem besonderen Merkmal der Erfindung ist vorgesehen, dass das Auge nach Art eines Konus' ausgebildet ist. Korrespondierend hierzu weist der Bolzen einen zylindrischen Riegel auf, auf dem im Bereich des Auges ein entsprechend dem Auge ausgebildeter Konus angeordnet ist. Das heißt, dass beim Einrücken des Bolzens bzw. des zylindrischen Riegels in das Auge des einen Kuppelgliedes eine im Wesentlichen spielfreie Verbindung zwischen den beiden Kuppelgliedern ausgebildet wird.

Um zu verhindern, dass der Bolzen bzw. der zylindrische Riegel einseitig belastet wird, ist nach einem weiteren Merkmal der Erfindung vorgesehen, dass an den Konus anschließend der Bolzen einen zylindrischen Zusatz aufweist, der von dem Aufnahmeelement aufnehmbar ist. Hieraus wird deutlich, dass das Aufnahmeelement gabelförmig ausgebildet ist und entsprechend zwei beabstandet zueinander angeordnete Schenkel aufweist, wobei die Schenkel der Aufnahme des Bolzens dienen.

Um den Kuppelvorgang zu erleichtern, weist das Aufnahmeelement, das am Bus angeordnet ist, auf seiner der Traverse zugewandten Seite einen Einlauftrichter für das eine Kuppelglied auf.

Nach einem weiteren Merkmal ist zum Ein- und Ausrücken des Bolzens an dem Aufnahmeelement ein mit dem Bolzen in Verbindung stehender Schwenkhebel vorgesehen, wobei der Schwenkhebel hydraulisch, pneumatisch, mechanisch oder elektrisch betätigbar ist.

Wie bereits oben dargelegt, soll der Anhänger doppelachsig ausgebildet sein. Um nun zu gewährleisten, dass z. B. ein Bus mit einem derartigen Anhänger auch bei einer Gesamtlänge des Fahrzeugs von ca. 20 Metern noch in der Lage ist, den Einheitskreis, das heißt einen Kreis von 12,50 Metern zu durchfahren, ist vorgesehen, dass zumindest die eine der Hinterachsen des Hängers lenkbar ausgebildet ist. Das heißt, denkbar ist auch, die Vorderachse des Hängers neben der bzw. den Hinterachse(n) lenkbar auszugestalten. Hierbei ist im Einzelnen vorgesehen, dass die Vorgabe für den Lenkwinkel der Räder der Hinterachse durch die Stellung der Gelenkarme der Gelenkverbindung, also des Kreuzgelenkes, erfolgt.

Hierbei ist insbesondere vorgesehen, dass die Vorgabe des Lenkwinkels der Hinterachse mechanisch durch ein die Hinterachse mit dem Gelenk verbindendes Gestänge erfolgt. Um die Kupplung des Hängers mit dem Kreuzgelenk an dem Fahrzeug zu erleichtern ist vorgesehen, dass die Gelenkarme endseitig durch eine Traverse verbunden sind, wobei die Traverse an das Fahrzeug kuppelbar ist.

Anhand der Zeichnungen wird die Erfindung nachstehend beispielhaft näher erläutert:

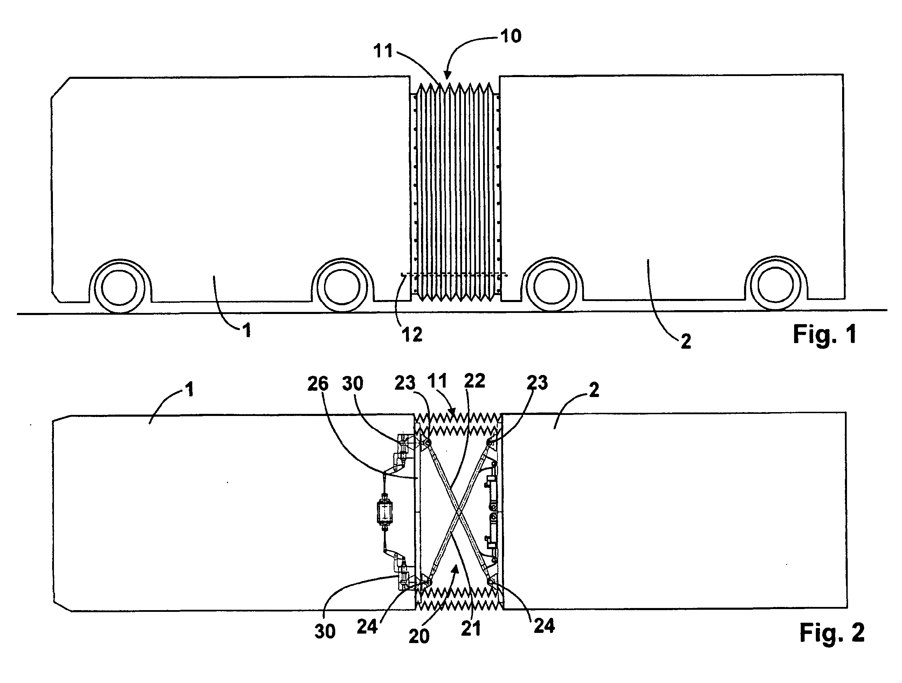

- Figur 1: zeigt ein Zugfahrzeug mit Hänger in einer Seitenansicht, wobei Zugfahrzeug und Hänger durch einen Übergang miteinander verbunden sind;
- Figur 2: zeigt das Gespann gemäß Figur 1 schematisch in einer Ansicht von oben, wobei Balg und Brücke sowie das Gelenk erkennbar sind;
- Figur 3: zeigt eine Rückansicht des Anhängers, wobei die Rückansicht des Zugfahrzeuges in Bezug auf den Verschluss der Durchgangsöffnung gleich ausgebildet ist;
- Figur 4: zeigt das Gelenk in perspektivischer Darstellung;
- Figur 5: zeigt eine Ansicht von oben auf das Gelenk;
- Figur 6: zeigt die Lenkung der Achsen des Anhängers durch ein Gestänge, das an dem Gelenk angeordnet ist.

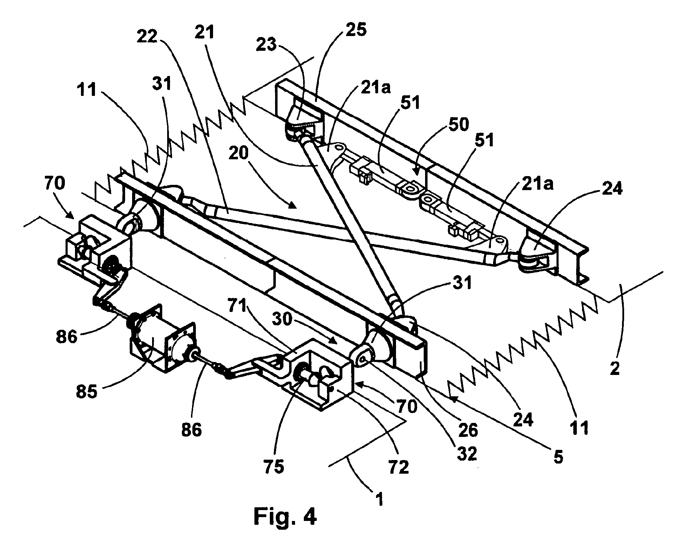

Aus den Figuren ist erkennbar, dass das Zugfahrzeug 1 den doppelachsigen Anhänger 2 kuppelbar aufnimmt. Die Trennebene zwischen Zugfahrzeug und Anhänger ist durch den Pfeil 5 gekennzeichnet. Zwischen dem Zugfahrzeug 1 und dem Hänger 2 ist ein Übergang 10 vorgesehen, wobei der Übergang 10 aus einem Balg 11 und einer Übergangsbrücke 12 besteht. Die Übergangsbrücke 12 ist hierbei durch Scharniere 12a klappbar am Hänger befestigt, um diese bei Nichtgebrauch hochklappen zu können. Zur gelenkigen Verbindung des Hängers mit dem Zugfahrzeug ist ein sogenanntes Kreuzgelenk 20 (Figur 4) vorgesehen. Dieses Kreuzgelenk umfasst zwei diagonal zueinander angeordnete Arme 21 und 22, die endseitig am Hänger 2 durch Gelenke 23, 24 an der Traverse 25 gelenkig aufgenommen sind, am anderen Ende sind die Arme von einer Traverse 26 aufgenommen. Die Gelenke 23, 24 können auch unmittelbar am Chassis des Anhängers angeordnet sein.

Die Gelenkarme 21, 22 weisen im Bereich des Hängers, d. h. der Traverse 25, eine Dämpfungseinheit 50 auf. Die Dämpfungseinheit 50 umfasst zwei Kolbenzylinderantriebe 51, die einerseits am Fahrzeug und andererseits durch eine am jeweiligen Gelenkarm 21, 22 angeordnete Nase 21 a, 22a an den Gelenkarmen angelenkt sind. Die Kolbenzylinderantriebe 51 können hierbei sehr kurz bauen und sind demzufolge in der Lage, relativ große Dämpfungskräfte auf die Gelenkarme 21, 22 auszuüben. Darüber hinaus ist die Übergangsbrücke 12 erkennbar, die im Bereich des Hinterwagens, um eine Drehung des Hinterwagens um den Vorderwagen zu ermöglichen, eine kreisrunde Ausbildung erhalten hat (Pfeil 60). Des Weiteren ist der Faltenbalg 11 schematisch erkennbar (Fig. 4).

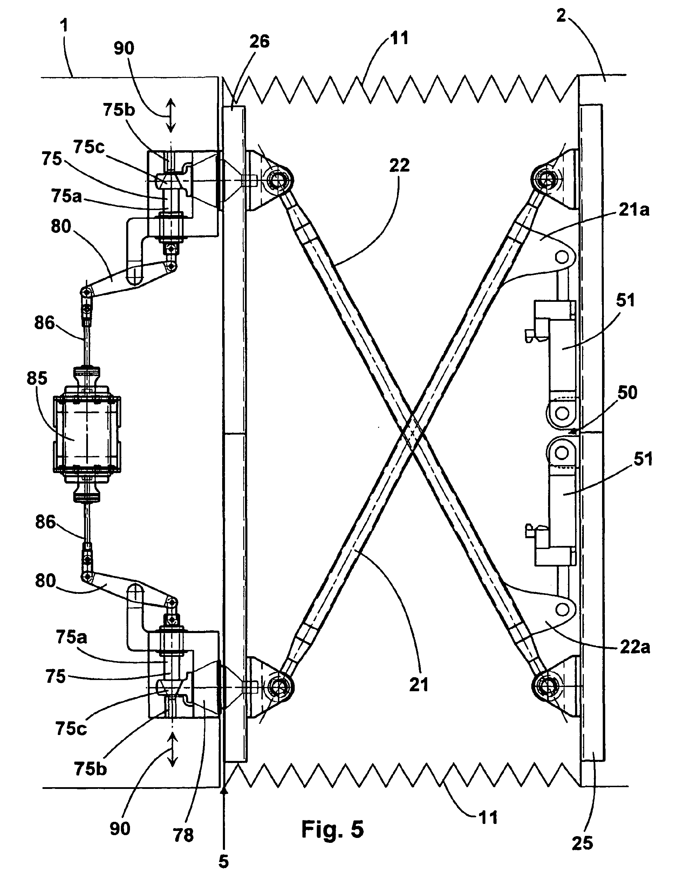

Die Art der Kupplung des Hängers am Zugfahrzeug ergibt sich insbesondere aus den Figuren 4 und 5. Wesentlich hierbei ist, dass das Gelenk mit den Gelenkarmen am Anhänger verbleibt. Die Kupplung des Hängers 2 mit der Traverse 26 an das Zugfahrzeug 1 ist nun Gegenstand der nachfolgenden Erörterungen.

Die Traverse 26 des Hängers 2 besitzt beabstandet zueinander zwei Kupplungen mit jeweils dem Kuppelglied 31, wobei die Kuppelglieder 31 endseitig jeweils ein horizontal verlaufendes Auge 32 besitzen. Korrespondierend zu den Kuppelgliedern 31 sind am Chassis des Zugfahrzeuges 1 Aufnahmeelemente 70 vorgesehen. Ein solches Aufnahmeelement 70 weist zwei gabelförmig verlaufende Schenkel 71 und 72 auf. Die beiden Schenkel 71 und 72 dienen der Aufnahme des insgesamt mit 75 bezeichneten Bolzens. Der Bolzen 75 weist zwei zylindrische Abschnitte 75a und 75b auf, wobei zwischen den beiden Abschnitten 75a und 75b ein Konus 75c angeordnet ist, der in das ebenfalls konisch ausgebildete Auge 32 einläuft und auf Grund des konischen Sitzes im Wesentlichen eine spielfreie Verbindung zwischen den Kuppelgliedern bewerkstelligt. Der Bolzen 75 selbst wird bei Einsitzen seines Konus' in dem Auge 32 durch die beiden Schenkel 71 und 72 gehalten, so dass ein Verbiegen des Bolzens bei Belastung nicht möglich ist.

Um beim Ankuppeln des Hängers an das Zugfahrzeug das Einlaufen des an der Traverse 26 angeordneten einen Kuppelgliedes in das Aufnahmeelement zu erleichtern, besitzt das Aufnahmeelement einen sich in Richtung auf die Traverse 26 öffnenden konischen Trichter 78. Zum Ein- bzw. Ausrücken des Bolzens 75 ist ein an dem Aufnahmeelement 70 angeordneter Schwenkhebel 80 vorgesehen, der einerseits - wie bereits ausgeführt - mit dem Bolzen 75 und andererseits mit einem Kolbenzylinderantrieb 85 durch das Gestänge 86 in Verbindung steht, um bei Verschwenkung des Hebels den Bolzen 75 entlang des Pfeils 90 zu bewegen.

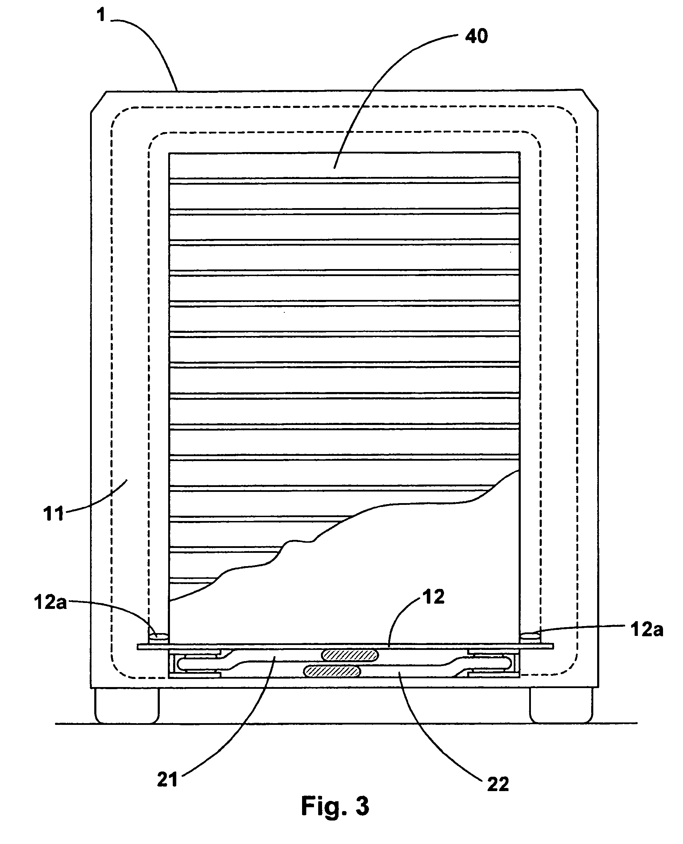

Um nach Abkuppeln des Hängers die Öffnung sowohl des Zugfahrzeugs als auch des Anhängers verschließen zu können, ist jeweils ein Rollo 40 vorgesehen (Fig. 3).

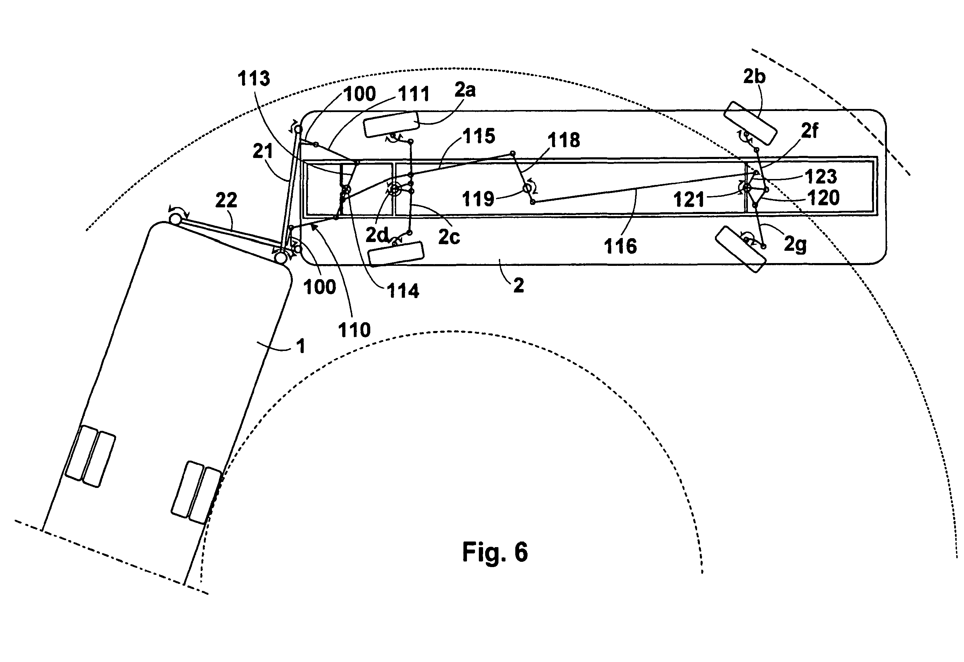

Figur 6 zeigt die Lenkung der Achsen des Anhängers durch das Gestänge, das mit den beiden Gelenkarmen verbunden ist. Die Darstellung gemäß Figur 6 ist lediglich schematisch, um das Prinzip der Lenkung zu verdeutlichen. An beiden Armen 21, 22 des Gelenks 20 ist an den einander gegenüberliegenden Enden jeweils ein Gelenkbock 100 vorgesehen, wobei die Gelenkböcke das Lenkgestänge 110 gelenkig aufnehmen. Das Lenkgestänge 110 besitzt die beiden Lenker 111, 112, die durch eine Kuppelstange 113 wiederum gelenkig miteinander verbunden sind. Die Kuppelstange 113 ist mittig durch ein Drehlager 114 mit dem Anhänger verbunden. An der Kuppelstange gelenkig angeordnet ist das Übertragungsgestänge 115, das durch einen am Anhänger schwenkbar angeordneten Schwenkarm 118 drehbeweglich mit dem Übertragungsgestänge 116 verbunden ist. Beide Gestänge 115, 116 sind endseitig am Schwenkarm 118 drehbeweglich angeordnet.

Der Schwenkarm 118 selbst ist ebenfalls drehbeweglich am Anhänger 2 angeordnet. Die Anordnung des Drehgelenks 119 am Anhänger ist derart getroffen, dass bei einer vorgegebenen Stellung des Gelenks 20 die Lenkwinkelstellung der Räder 2a der vorderen Achse des Anhängers und die der Räder 2b der hinteren Achse vorgegeben ist. Hierbei kann der Lenkwinkel der vorderen und der hinteren Räder unterschiedlich sein, um zu gewährleisten, dass insbesondere der Bus den Einheitskreis mit Anhänger durchfahren kann. Insofern muss das Drehgelenk 119 den Schwenkarm nicht mittig halten. Das Übertragungsgestänge 115 ist an der vorderen Achse 2c außermittig schwenkbeweglich angeordnet, um die vordere Achse 2c um ihren Drehpunkt 2d verschwenken zu können.

Die hintere Achse des Anhängers umfasst zwei Gelenkhebel 2f, 2g, die durch einen Lenkerkopf 120 gelenkig miteinander gekoppelt sind. Der Lenkerkopf 120 hat eine im Wesentlichen dreieckige Geometrie und ist mit einer Spitze am Anhänger durch das Drehlager 121 drehbeweglich gelagert. Der Lenkerkopf 120 weist im Bereich des Drehlagers 121 einen Schwenkhebel 123 auf, der endseitig mit dem Übertragungsgestänge 116 schwenkbeweglich gekoppelt ist. Hieraus wird deutlich, dass durch ein Gestänge beide Radpaare 2a, 2b gelenkt werden können.

## Patentansprüche

1. Zugfahrzeug mit einem doppelachsigen Anhänger (2), wobei zwischen Anhänger (2) und Zugfahrzeug (1) eine Gelenkverbindung vorgesehen ist, wobei die Gelenkverbindung leicht lösbar an das Zugfahrzeug (1) an- bzw. abkuppelbar ist und wobei zwischen Zugfahrzeug (1) und Anhänger (2) ein Übergang vorgesehen ist, der durch einen Balg umschlossen ist, wobei die Gelenkverbindung zwei kreuzweise zueinander verlaufende Gelenkarme umfasst, die jeweils endseitig an dem entsprechenden Fahrzeug schwenkbar angelenkt sind,
**dadurch gekennzeichnet,**
**dass** die Gelenkarme (21, 22) endseitig durch eine Traverse verbunden sind, wobei die Traverse an das Zugfahrzeug (1) an- bzw. abkuppelbar ist, wobei zur Kupplung der Traverse des Anhängers mit dem Zugfahrzeug (1) mindestens eine vorzugsweise zwei beabstandet zueinander angeordnete Kupplungen (30) mit jeweils zwei Kuppelgliedern (31; 70, 75) vorgesehen sind, wobei die beiden Kuppelglieder hydraulisch, pneumatisch, mechanisch oder elektrisch lösbar in Eingriff miteinander bringbar sind.

2. Zugfahrzeug nach Anspruch 1,
**dadurch gekennzeichnet,**
**dass** die Hinterachse des Anhängers (2) lenkbar ausgebildet ist, wobei die Vorgabe für den Lenkwinkel der Räder der Hinterachse durch die Stellung der Gelenkarme (21, 22) der Gelenkverbindung erfolgt.

3. Zugfahrzeug nach Anspruch 2,
**dadurch gekennzeichnet,**
**dass** die Vorgabe des Lenkwinkels der Hinterachse mechanisch durch ein die Hinterachse mit der gelenkverbindung verbindendes Gestänge erfolgt.

4. Zugfahrzeug nach einem oder mehreren der voranstehenden Ansprüche,
**dadurch gekennzeichnet,**
**dass** das Zugfahrzeug hinten eine verschließbare Türöffnung und der Anhänger (2) korrespondierend eine verschließbare Türöffnung zur Verbindung durch den Übergang (10) aufweist.

5. Zugfahrzeug nach einem oder mehreren der voranstehenden Ansprüche,
**dadurch gekennzeichnet,**
**dass** der Übergang eine klappbare Übergangsbrücke (12) umfasst.

6. Zugfahrzeug nach Anspruch 1,
**dadurch gekennzeichnet,**
**dass** das eine Kuppelglied (31) an der Traverse (26) angeordnet ist und endseitig ein Auge (32) aufweist.

7. Zugfahrzeug nach Anspruch 6,
**dadurch gekennzeichnet,**
**dass** das andere am Zugfahrzeug angeordnete Kuppelglied (70, 75) einen in das Auge (32) hydraulisch, pneumatisch, mechanisch oder elektrisch ein- und ausrückbaren Bolzen (75) umfasst, der in einem Aufnahmeelement (70) axial beweglich gehalten ist.

8. Zugfahrzeug nach Anspruch 7,
**dadurch gekennzeichnet,**
**dass** das Auge (32) nach Art eines Konus ausgebildet ist.

9. Zugfahrzeug nach Anspruch 8,
**dadurch gekennzeichnet,**
**dass** der Bolzen (75) zylindrisch ausgebildet ist und im Bereich des Auges (32) einen entsprechend dem Auge ausgebildeten Konus (75c) aufweist.

10. Zugfahrzeug nach Anspruch 9,
**dadurch gekennzeichnet,**
**dass** an den Konus (75c) anschließend der Bolzen (75) einen zylindrischen Ansatz (75b) aufweist, der von dem Aufnahmeelement (70) aufnehmbar ist.

11. Zugfahrzeug nach Anspruch 7,
**dadurch gekennzeichnet,**
**dass** das Aufnahmeelement (70) auf seiner der Traverse (26) zugewandten Seite einen Einlauftrichter (78) für das eine Kuppelglied (31) aufweist.

12. Zugfahrzeug nach Anspruch 10,
**dadurch gekennzeichnet,**
**dass** das Aufnahmeelement (70) gabelförmig ausgebildet ist und zwei beabstandet zueinander angeordnete Schenkel (71, 72) aufweist, wobei die Schenkel (71, 72) der Aufnahme des Bolzens (75) dienen.

13. Zugfahrzeug nach Anspruch 7,
**dadurch gekennzeichnet,**
**dass** zum Ein- und Ausrücken des Bolzens (75) an dem Aufnahmeelement (70) ein mit dem Bolzen in Verbindung stehender Schwenkhebel (80) vorgesehen ist, der hydraulisch, pneumatisch, mechanisch oder elektrisch betätigbar ist.

## Claims

1. A tractor unit with a double axle trailer (2), a connecting joint being provided between the trailer (2) and the tractor unit (1), said connecting joint being adapted to be readily releasably coupled to and uncoupled from the tractor unit (1) and a connection, which is surrounded by a bellows, being provided between tractor unit (1) and trailer (2), the connecting joint including two joint arms that are oriented crosswise and are pivotally hinge-linked at their end to the corresponding vehicle,
**characterized in that**
the joint arms (21, 22) are joined together at their end by a tie bar, said tie bar being adapted to be coupled to and uncoupled from the tractor unit (1), at least one, preferably two, spaced-apart coupling assemblies (30) having two coupling members (31; 70, 75) each being provided for coupling the tie bar of the trailer to the tractor unit (1), said two coupling members being adapted to hydraulically, pneumatically, mechanically or electrically releasably engage with one another.

2. The tractor unit in accordance with claim 1,
**characterized in that**
the rear axle of the trailer (2) is configured to be steerable, the steering angle of the wheels of the rear axle being dictated by the position of the joint arms (21, 22) of the connecting joint.

3. The tractor unit in accordance with claim 2,
**characterized in that**
the steering angle of the rear axle is dictated mechanically by a linkage connecting the rear axle with the connecting joint.

4. The tractor unit in accordance with one or several of the afore mentioned claims,
**characterized in that**
the tractor unit comprises at the rear a closable door pocket space and the trailer (2) correspondingly comprises a closable door pocket space for connecting with the connection (10).

5. The tractor unit in accordance with one or several of the afore mentioned claims,
**characterized in that**
the connection comprises a foldable gangway connection (12).

6. The tractor unit in accordance with claim 1,
**characterized in that**,
the one coupling member (31) is disposed on the tie bar (26) and comprises an eye (32) at its end.

7. The tractor unit in accordance with claim 6,
**characterized in that**
the other coupling member (70, 75) disposed on the tractor unit comprises a pin (75) that is adapted to hydraulically, pneumatically, mechanically or electrically engage with and disengage from the eye (32), said pin being axially movably retained in a receiving element (70).

8. The tractor unit in accordance with claim 7,
**characterized in that**
the eye (32) is configured like a cone.

9. The tractor unit in accordance with claim 8,
**characterized in that**
the pin (75) is configured to be cylindrical and comprises in the region of the eye (32) a cone (75c) configured to conform to the eye.

10. The tractor unit in accordance with claim 9,
**characterized in that**
the pin (75) comprises a cylindrical extended portion (75b) that adjoins with the cone (75c) and is receivable by the receiving element (70).

11. The tractor unit in accordance with claim 7,
**characterized in that**
the receiving element (70) comprises, on its side turned toward the tie bar (26), an admission hopper (78) for the one coupling member (31).

12. The tractor unit in accordance with claim 10,
**characterized in that**
the receiving element (70) is configured in the shape of a fork and comprises two spaced-apart legs (71, 72), said legs (71, 72) serving to receive the pin (75).

13. The tractor unit in accordance with claim 7,
**characterized in that**,
for engaging and disengaging the bolt (75), there is provided on the receiving element (70) a pivotal lever (80) that communicates with the pin, said pivotal lever being hydraulically, pneumatically, mechanically or electrically actuatable.

## Revendications

1. Véhicule tracteur avec une remorque (2) à deux essieux, une liaison articulée étant prévue entre la remorque (2) et le véhicule tracteur (1), la liaison articulée étant apte à être couplée au véhicule tracteur (1) et découplée de celle-ci de manière aisément amovible, une intercirculation fermée par un soufflet périphérique étant prévue entre le véhicule tracteur (1) et la remorque (2), la liaison articulée comprenant deux bras d'articulation en croix, articulés chacun mobile en pivotement à une extrémité sur le véhicule correspondant,
**caractérisé en ce**
**que** les bras (21, 22) de l'articulation sont reliés à leur extrémité par une traverse, la traverse étant apte à être couplée au véhicule tracteur (1) et à en être découplée, au moins un, de préférence deux coupleurs (30) espacés l'un de l'autre et ayant chacun deux organes coupleurs (31 ; 70, 75) étant prévus pour coupler la traverse de la remorque au véhicule tracteur (1), les deux organes coupleurs étant aptes à être mis en prise amovible l'un avec l'autre de manière hydraulique, pneumatique, mécanique ou électrique.

2. Véhicule tracteur selon la revendication 1,
**caractérisé en ce**
**que** l'essieu arrière de la remorque (2) est conformé pour être orientable, l'angle de direction des roues de l'essieu arrière étant imposé par la position des bras (21, 22) de l'articulation de la liaison articulée.

3. Véhicule tracteur selon la revendication 2,
**caractérisé en ce**
**que** l'angle de direction de l'essieu arrière est imposé mécaniquement par une tringlerie reliant l'essieu arrière à la liaison articulée.

4. Véhicule tracteur selon une ou plusieurs des revendications précédentes,
**caractérisé en ce**
**que** le véhicule tracteur comporte à l'arrière une baie de porte apte à être fermée et que la remorque (2) comporte une baie de porte complémentaire apte à être fermée afin d'assurer la liaison par l'intermédiaire de l'intercirculation (10).

5. Véhicule tracteur selon une ou plusieurs des revendications précédentes,
**caractérisé en ce**
**que** l'intercirculation comprend une passerelle d'intercirculation (12) rabattable.

6. Véhicule tracteur selon la revendication 1,
**caractérisé en ce**
**que** l'un des organes coupleurs (31) est disposé sur la traverse (26) et comporte un oeil (32) à son extrémité.

7. Véhicule tracteur selon la revendication 6,
**caractérisé en ce**
**que** l'autre organe coupleur (70, 75) disposé sur le véhicule tracteur comprend une cheville (75) apte à s'engager dans l'oeil (32) ou à s'en désengager de manière hydraulique, pneumatique, mécanique ou électrique, cette cheville étant retenue mobile suivant la direction axiale dans un élément récepteur (70).

8. Véhicule tracteur selon la revendication 7,
**caractérisé en ce**
**que** l'oeil (32) est conformé en forme de cône.

9. Véhicule tracteur selon la revendication 8,
**caractérisé en ce**
**que** la cheville (75) est conformée en forme de cylindre et comporte, à la hauteur de l'oeil (32), un cône (75c) conjugué de l'oeil.

10. Véhicule tracteur selon la revendication 9,
**caractérisé en ce**
**que** la cheville (75) comporte, dans le prolongement du cône (75c), une partie rapportée cylindrique (75b) apte à être reçue par l'élément récepteur (70).

11. Véhicule tracteur selon la revendication 7,
**caractérisé en ce**
**que** l'élément récepteur (70) comporte, sur sa face tournée vers la traverse (26), un entonnoir d'engagement (78) de l'un des organes coupleurs (31).

12. Véhicule tracteur selon la revendication 10,
**caractérisé en ce**
**que** l'élément récepteur (70) est conformé en forme de fourche et comporte deux branches (71, 72) espacées l'une de l'autre et servant à recevoir la cheville (75).

13. Véhicule tracteur selon la revendication 7,
**caractérisé en ce**
**qu'**un levier pivotant (80) relié à la cheville et destiné à engager et à désengager la cheville (75) est prévu sur l'élément récepteur (70), ce levier pivotant étant agencé pour être actionné hydrauliquement, pneumatiquement, mécaniquement ou électriquement.
